# EUROPÄISCHE PATENTSCHRIFT

(11) **EP 2 234 713 B1**
(45) Veröffentlichungstag und Bekanntmachung des Hinweises auf die Patenterteilung: **12.10.2016**
(21) Anmeldenummer: 09705825.9
(22) Anmeldetag: 28.01.2009
(51) Int. Cl.: B01J 19/00, F28D 9/00

(54) **Verwendung eines Wärmetauschers zur Durchführung chemischer Reaktionen**
Use of a heat exchanger for chemical reactions
Utilisation d'un échangeur de chaleur pour réactions chimiques

(30) Priorität: 28.01.2008 EP 08001544
(43) Veröffentlichungstag der Anmeldung: 06.10.2010
(73) Patentinhaber: Marold, Freimut Joachim, 46282 Dorsten (DE)
(72) Erfinder: Marold, Freimut Joachim, 46282 Dorsten (DE)
(74) Vertreter: Best, Michael
(86) Internationale Anmeldenummer: PCT/EP2009/000540
(87) Internationale Veröffentlichungsnummer: WO 2009/095221

(56) Entgegenhaltungen:
- EP-A- 1 306 126
- WO-A-2005/063616
- DE-A1- 4 333 904
- DE-A1- 4 416 645
- DE-A1-102004 005 863
- DE-A1-102007 023 186
- US-A- 2 383 292
- US-A- 4 594 227
- US-A- 4 636 365
- US-A1- 2005 020 851
- US-A1- 2005 252 645

## Beschreibung

Die vorliegende Erfindung betrifft die Verwendung eines Wärmetauschers mit einer Außenhülle und mindestens zwei Wärmeüberträgermodulen zur Durchführung chemischer Reaktionen.

Bei der Durchführung von chemischen Reaktionen sowie Verdampfungs- und Kondensationsprozessen in Wärmetauschern wird die Reaktionswärme häufig über ein Kühl- oder Heizmittel abgeführt oder zugeführt, wobei das Kühl- oder Heizmittel durch Wärmeüberträgermodule, beispielsweise bestehend aus Rohrschlangen, Rohrbündeln oder Thermoblechen, geleitet wird. Bei der Durchführung von chemischen Reaktionen stellen die Wärmetauscher Reaktoren, bei der Durchführung von Verdampfungs- und Kondensationsprozessen stellen sie Kondensatoren, wie beispielsweise Kopfkondensatoren, dar.

Wärmeüberträgermodule insbesondere aus Thermoblechen sind bereits bekannt und werden häufig bei großtechnischen Verfahren eingesetzt.

Beispielsweise sind Reaktoren insbesondere zur Durchführung von Partialoxidationen unter Verwendung von Thermoblechen in der DE-A 199 52 964, der DE-C 197 54 185, der DE-A 198 48 208 und der WO-A 01/85331 beschrieben. Besonders vorteilhafte Plattenreaktoren sind auch in der EP-A 1 002 571 beschrieben, die einen Reaktor zur Durchführung von Reaktionen mit starker Wärmetönung betrifft. Bei den dort beschriebenen Reaktoren werden mehrere Thermobleche, zwischen die Katalysatorpartikel eingebracht werden können, nebeneinander im Reaktorbehälter so angeordnet, dass sie ein Thermoblechmodul aus Plattenpaketen bilden, in dem die Plattenpakete parallel vom Einsatzgas durchströmt werden. Ein derartiger modularer Aufbau bringt bei der Reaktionsführung große Vorteile. Insbesondere können bei derartigen Reaktoren einzelne Thermoblechmodule ausgetauscht und gewartet werden, so dass der Reaktor im Falle eines beschädigten Thermoblechmoduls oder bei Wartungsarbeiten nur für kurze Zeit abgeschaltet werden muss, während das Thermoblechmodul gewechselt wird. Spezielle Reaktoren ermöglichen auch das Entnehmen von einzelnen Thermoblechmodulen und die weitere Reaktionsführung in dem Reaktor ohne diese Thermoblechmodule.

In der EP-A 1 221 339 ist ein Wärmtauscher beschrieben, in dem Thermobleche in vorteilhafter modularer Bauweise ausgestaltet sind. Die Thermoblechmodule sind dabei kleiner als ein am Reaktor befindliches Mannloch.

EP 1 306 126 A1 offenbart die Verwendung eines Wärmetauschers für isothermale chemische Reaktionen.

Für spezielle Anwendungen wären jedoch häufig variablere und besser einstellbare Temperaturführungen erwünscht, als sie mit den bekannten Thermoblechen und Thermoblechmodulen erzielt werden können.

Die Aufgabe der vorliegenden Erfindung ist es, einen Wärmetauscher mit einer Außenhülle, mindestens 2 Wärmeüberträgermodulen und mit den Wärmeüberträgermodulen verbundenen Zu- und Ableitungen für eine Kühl- oder Heizmittelversorgung zur Durchführung von chemischen Reaktionen sowie Verdampfungs- und Kondensationsprozessen mit starker Wärmetönung zur Verfügung zu stellen, der die oben dargestellten Nachteile nicht aufweist.

Diese Aufgabe wird durch den Gegenstand der Patentansprüche gelöst.

Die Erfindung betrifft den Gegenstand der Ansprüche 1 und 2 und basiert auf einem Thermoblech, das mittels Roll- oder Schweißnaht in mindestens zwei Züge 51, 52, 53 aufgeteilt ist, sowie auf einem Modul 100 aus derartigen Thermoblechen, bei dem die einzelnen Züge durch gemeinsame Zu- und Ableitungen 4a, 4b, 4c, 5a, 5b, 5c verbunden sind, wobei zumindest eine Roll- oder Schweißnaht (62) zwischen zwei Zügen an mindestens einer Stelle (63) unterbrochen ist, so dass eine Durchtrittsstelle für ein Fluid zwischen den beiden Zügen besteht, so dass die Medien benachbarter Züge in Kontakt treten und eine chemische Reaktion eingehen können.

In einer bevorzugten Ausführungsform ist zumindest einer der Züge mit Schikanen 61 versehen ist, was es erleichtert, den Fluss innerhalb der Züge gezielt zu steuern. Diese Schikanen 61 können bevorzugterweise durch Roll- oder Schweißnähte hergestellt werden.

Im Stand der Technik besteht ein Thermoblechmodul immer aus einzügigen Thermoblechen, die zu einem Durchgang verbunden sind. Bei den erfindungsgemäß verwendeten mehrzügigen Thermoblechmodulen sind mehrere Thermoblechabschnitte jeweils zu einem Durchgang verbunden. Die erfindungsgemäß verwendeten mehrzügigen Thermobleche haben gegenüber den im Stand der Technik bekannten einzügigen Thermoblechen eine Reihe von Vorteilen, die sich insbesondere dann zeigen, wenn die Thermobleche zu Thermoblechmodulen zusammengefasst werden.

Durch die erfindungsgemäß verwendeten Thermoblechmodule ist ein Wärmetausch auch zwischen mehr als zwei Medien möglich. Theoretisch ist die Anzahl der Medien nicht beschränkt (nur durch die Zahl der Züge), sie beläuft sich im Hinblick auf Praktikabilität und Zweckmäßigkeit aber auf zwei bis fünf verschiedene Medien. Durch unterschiedlich große Züge innerhalb eines Thermoblechmoduls können weiterhin sehr kleine Volumenströme mit großen Volumenströmen in ein und demselben Thermoblechmodul miteinander kombiniert werden. Somit sind die Parameter Volumenstrom und Flussgeschwindigkeit der Medien getrennt voneinander steuerbar. Anstatt mehrere Wärmetauscher zu betreiben, können mit den erfindungsgemäß verwendeten Thermoblechmodulen unterschiedliche Medienkreisläufe in einem einzigen Thermoblechmodul zusammengefasst werden, was einen hohen wirtschaftlichen Vorteil darstellt und eine flexible Verfahrensführung auf kleinem Raum ermöglicht. Auch eine Kombination von Gas- und Flüssigkeitskanälen in einem Modul ist durchaus möglich. Sowohl Verdampfung als auch Kondensation und Abscheidung von Feststoffen (Sublimation, Kristallisation, etc.) sind in dem Wärmetauscher sowohl außerhalb als auch innerhalb der Züge jederzeit möglich.

Auch bei Verwendung nur eines Mediums gibt die Verwendung der mehrzügigen Thermobleche daher erhebliche Vorteile. So können die verschiedenen Züge der Thermobleche unterschiedliche Volumina und gegebenenfalls durch Schikanen bedingte unterschiedliche Laufwege für das Medium aufweisen, was es ermöglicht, innerhalb eines Thermoblechmoduls unterschiedliche Temperaturprofile einzustellen.

Des weiteren eignen sich die Thermoblechmodule nicht nur zur Kühl- und Heizmittelversorgung, sondern auch für chemische und physikalische Reaktionen, die innerhalb der Thermobleche stattfinden. Durch die Unterbrechungen der Roll- oder Schweißnähte können die Medien benachbarter Züge in Kontakt treten und eine chemische oder physikalische Reaktion eingehen. Reaktanden können hierdurch an genau festgelegten Stellen innerhalb der Thermobleche zugeführt werden. Die mögliche Zuführung von Seitenströmen bei idealem Temperaturniveau kann zudem Temperaturüberschneidungen (Pinch) im QT-Verlauf verhindern. Die Thermobleche erlauben weiterhin einen Anstich zum Abzug von Medien bei genau festgelegten Temperaturen.

Des weiteren sind in den Thermoblechen sehr hohe Drücke in einzelnen Querschnitten möglich.

Weiterhin ist es bei den Thermoblechen möglich, die Einzelquerschnitte innerhalb des Apparates zu optimieren, wodurch vergleichsweise sehr hohe Wärmeübergangszahlen realisiert werden können.

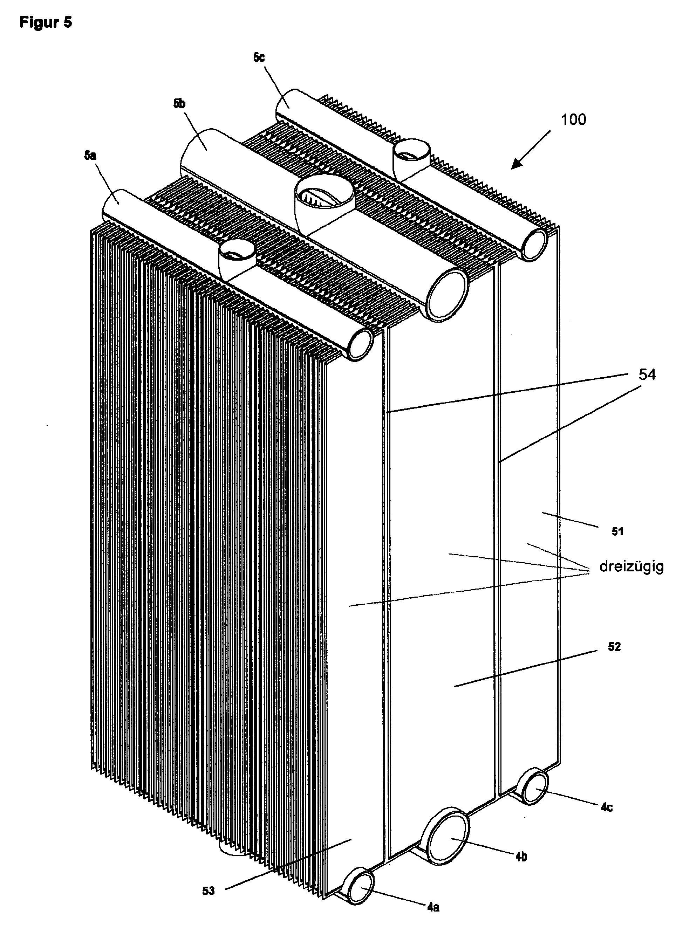

Die mehrzügigen Thermobleche können einfach aus bekannten einzügigen Thermoblechen hergestellt werden, indem ein konventionelles einzügiges Thermoblech mittels Roll- oder Schweißnähten 54 in mehrere Züge 51, 52, 53 aufgeteilt wird. Jeder Zug wird dann auf übliche Art und Weise mit Zu- und Ableitungen versehen, wie es in den Figuren 5 bis 9 gezeigt wird.

Die Zahl der Züge eines Thermoblechs ist nicht besonders eingeschränkt, zumindest müssen aber zwei Züge vorhanden sein. Die maximale Zahl der Züge wird nur durch die gewünschte Verwendung und die Größe der Thermobleche begrenzt, beträgt aber in der Regel nicht mehr als zehn, bevorzugt nicht mehr als sieben. Sehr vorteilhaft sind Thermobleche mit zwei, drei, vier oder fünf Zügen, insbesondere mit zwei oder drei Zügen.

Die einzelnen Züge können unterschiedlich große Bereiche des Thermoblechs einnehmen, wodurch beispielsweise unterschiedliche Volumenströme kombiniert werden können.

Wie vorstehend bereits ausgeführt, ist es möglich, in den einzelnen Zügen verschiedene Medien zum Zwecke der Wärmezufuhr oder Wärmeabfuhr durchzuleiten. Die unterschiedlichen Medien können stark unterschiedliche Wärmekapazitäten aufweisen. Medien mit geringer Wärmekapazität können beispielsweise schneller durch einen Zug geleitet werden, als Medien mit entsprechend größerer Wärmekapazität, da bei solchen Medien mit geringerer Wärmekapazität eine kürzere Zeit nötig ist, um die erforderliche Wärmemenge zu- oder abzuführen.

Erfindungsgemäß können in verschiedenen Zügen sogar Medien mit unterschiedlichen Aggregatzuständen verwendet werden, wie gasförmig und flüssig. Des weiteren sind Aggregatänderung und Stoffänderung bei Reaktionen möglich.

Die einzelnen Züge 51, 52, 53 der Thermobleche verlaufen bevorzugt vertikal, so dass auch ein Naturumlauf möglich wird und weisen an ihren oberen und unteren Enden Öffnungen auf, über die sie mit den Zu- und Ableitungen 4a, 4b, 4c und 5a, 5b, 5c der Medien verbunden sind. Der Verlauf der Medien in den benachbarten Zügen des Thermoblechs kann in gleicher Richtung aber auch in entgegengesetzter Richtung stattfinden. Des weiteren kann der Verlauf der Medien innerhalb der Züge durch unterschiedliche Ausbildungen der Längsnähte 54 beeinflusst werden. Die Längsnähte stellen Roll- oder Schweißnähte dar, welche die einzelnen Züge voneinander trennen. Sie können je nach Erfordernis einen geraden oder anders ausgebildeten Verlauf aufweisen. So kann der Verlauf kurvenförmig oder mit mehreren Abbiegungen gestaltet sein. Diese unterschiedlichen Verläufe der Längsnaht bzw. der Naht, die die benachbarten Züge voneinander trennt, beeinflussen und steuern den Verlauf der Medien innerhalb der Züge und die Verweildauer der Medien innerhalb der Züge.

Zur weiteren Steuerung des Verlaufs der Medien innerhalb eines Zugs 51, 52, 53 können Schikanen 61 angebracht werden. Derartige Schikanen werden geeigneterweise ebenfalls durch Roll- oder Schweißnähte erzeugt. Diese Schikanen stellen Ablenkungen innerhalb eines Zugs eines Thermoblechs dar. Die Schikanen sind in ihrer Form nicht besonders eingeschränkt. Die Schikanen können damit Fließkanäle für das Medium bilden, und die durch die Schikanen festgelegten Kanäle können beliebig orientiert sein, insbesondere auch mäandern oder diagonal verlaufen. Eine besondere Ausgestaltung sind geradlinige Schikanen, die zu der Fließrichtung des Mediums innerhalb des Thermoblechs querstehen.

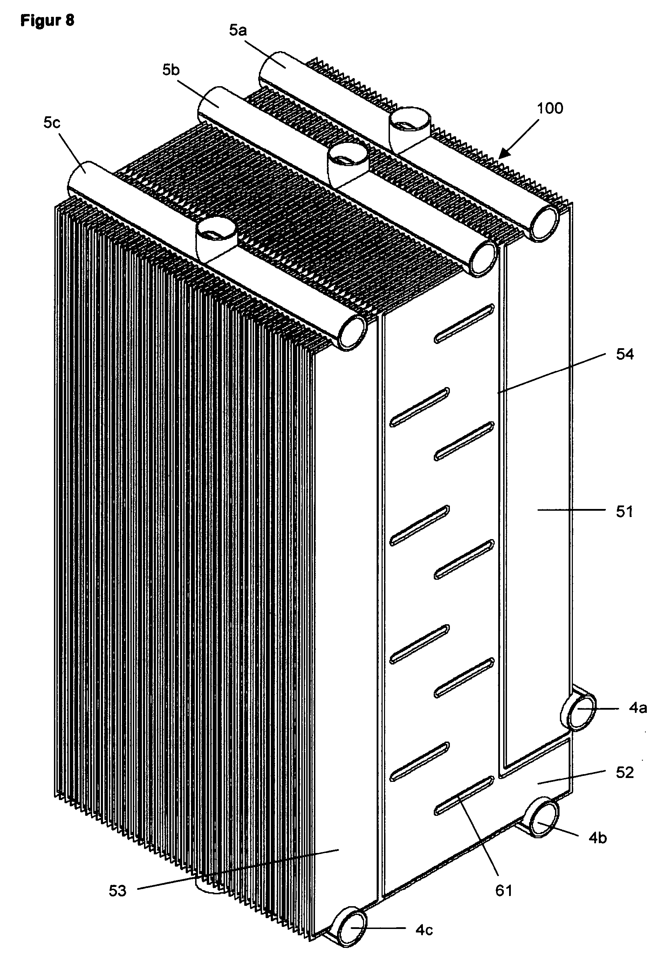

Es ist außerdem möglich, dass einzelne Züge 51, 52, 53 des Thermoblechs sich nicht über den gesamten Bereich des Thermoblechs erstrecken. In dem Fall schließt mindestens eine der Längsnähte 54 an mindestens einer Seite nicht an der oberen bzw. unteren Kante des Thermoblechs ab (beispielhaft für einen vertikalen Verlauf der Züge). Veranschaulicht ist dies in Figur 8, worin der, im Bild dargestellt, rechte Zug 52 sich nicht bis an die Unterkante des Thermoblechs erstreckt. Die für diesen Zug vorgesehene Zu- bzw. Ableitung 4c findet sich demzufolge an der seitlichen Kante des Thermoblechs, und der benachbarte Zug 52 erstreckt sich dementsprechend um den Bereich, um den der andere verkürzt worden ist. Die Kombination von unterschiedlich gestalteten Ablenkungen und Längsnähten ist durch die gewünschte Verfahrensführung bedingt und erlaubt die Einstellung komplexer Temperaturprofile in Thermoblechmodulen.

Außerdem sind die Längsnähte 62, die die Züge 51, 52, 53 der Thermobleche voneinander trennen, an bestimmten Stellen unterbrochen 63. Diese Unterbrechungen 63 stellen Verbindungen zwischen benachbarten Zügen 51, 52 dar, das heißt, dass das Medium, das durch einen Zug geleitet wird in den mit diesem verbundenen Zug gelangen kann und umgekehrt. Hierdurch wird eine Mischung der Medien ermöglicht, die durch die so verbundenen Züge geleitet werden. Die Unterbrechungen können beliebig groß sein, wodurch der Grad der Durchmischung je nach Erfordernis einstellbar ist. Es kann selbstverständlich mehr als eine Unterbrechung vorhanden sein. Dadurch lassen sich innerhalb der Thermobleche auch chemische Reaktionen durchführen. Die Medien, die durch die verbundenen Züge geleitet werden, können also Edukte und Reaktanden enthalten, und nachdem diese durch die Unterbrechung der Längsnaht in den jeweils anderen Zug gelangen, können chemische Reaktionen stattfinden. Durch die sorgfältige Kombination der Ausgestaltungen der Längsnähte, der Ablenkungen und der Platzierung der Unterbrechungen in den Längsnähten, können für spezielle chemische Reaktionen optimale Bedingungen im Hinblick auf die Temperatur zum Zeitpunkt der Durchmischung, den Verlauf des Temperaturgradienten und den Grad der Durchmischung der Medien erreicht werden. Dies kann insbesondere für kinetisch kontrollierte Reaktionen vorteilhaft sein.

Die Thermobleche sind zu Modulen zusammengefasst und bilden dadurch die Thermoblechmodule 100. Die Anzahl der so zusammengefassten Thermobleche ist nicht besonders beschränkt und richtet sich nach den Einsatzerfordernissen. Die in einem Thermoblechmodul befindlichen Thermobleche sind in der Regel baugleich im Hinblick auf die Kombination der angebrachten Roll- oder Schweißnähte 54, 61, 62. Die einander entsprechenden Züge der Thermobleche in dem Thermoblechmodul werden durch gemeinsame Zu- und Ableitungen 4a, 4b, 4c, 5a, 5b, 5c verbunden.

Ein Aspekt der Erfindung betrifft einen Wärmetauscher 30 mit einer Außenhülle 2, mindestens zwei Wärmeüberträgermodulen 3, wovon mindestens eines ein Thermoblechmodul 100 wie oben beschrieben ist, und mit den Wärmeüberträgermodulen 3 verbundenen Zu- bzw. Ableitungen 4, 5 für eine Kühl- oder Heizmittelversorgung, wobei die Zu- und/oder Ableitungen 4, 5 innerhalb der Außenhülle 2 des Wärmetauschers 30 zusammengeführt werden. Bevorzugterweise sind innerhalb der Außenhülle die Zuleitungen miteinander verbunden, weiter bevorzugt die Zu- und Ableitungen. Sind in dem Wärmetauscher 30 mehrere mehrzügige Thermoblechmodule vorhanden, werden die zu einer Zu- und Ableitung 4a, 4b, 4c, 5a, 5b, 5c verbundenen Thermoblechabschnitte 51, 52, 53 eines Thermoblechmoduls bevorzugt mit den entsprechenden Zu- und Ableitungen 4a, 4b, 4c, 5a, 5b, 5c der weiteren erfindungsgemäßen Thermoblechmodule verbunden. Es ist auch möglich, dass zwei oder mehr der Zu- und Ableitungen 4a, 4b, 4c, 5a, 5b, 5c desselben Thermoblechmoduls miteinander verbunden werden. Dabei versteht sich von selbst, dass nur solche Züge von Thermoblechen mit gemeinsamen Zu- und Ableitungen verbunden werden, durch die das gleiche Medium geleitet wird.

Die Erfindung wird im Folgenden anhand der einfachsten Ausführungsform näher beschrieben, bei der alle Zuleitungen 4a, 4b und 4c zu einer gemeinsamen Zuleitung 4 zusammengefasst werden und alle Ableitungen 5a, 5b und 5c zu einer gemeinsamen Ableitung 5 zusammengefasst werden, also nur ein Medium verwendet wird. Sofern nichts anderes ausdrücklich erwähnt wird oder für den Fachmann offensichtlich ist, gelten diese Ausführungen aber sinngemäß auch für die Ausgestaltungen gemäß der Erfindung, bei der nur einige oder keine der Zu- und Ableitungen 4a, 4b, 4c, 5a, 5b und 5c zusammengeleitet werden können, z.B. weil in verschiedenen Zügen verschiedene Medien geführt werden.

Wie vorstehend erwähnt, können die Thermobleche von Reaktanden und Edukten durchströmt werden, so dass innerhalb der Thermobleche eine chemische Reaktion stattfindet. Außerdem können die Thermobleche von einem Heiz- oder Kühlmittel durchflossen werden, und diese Ausführungsform wird im Folgenden im Wesentlichen beschrieben.

In einer bevorzugten Ausführungsform sind die mit den Wärmeüberträgermodulen 3, verbundenen Zu- oder Ableitungen 4, 5 über eine Dampftrommel 33 innerhalb der Außenhülle 2 des Wärmetauschers 30 miteinander verbunden. Im Falle von mehreren unterschiedlichen Medien und damit unterschiedlichen Kühl- bzw. Heizmittelkreisläufen in den mehrzügigen Thermoblechmodulen wird in der Regel nur ein geschlossener Kühl- bzw. Heizmittelkreislauf mit der Dampftrommel verbunden.

In einer weiter bevorzugten Ausführungsform ist die Dampftrommel 33 vollständig innerhalb der Außenhülle 2 angeordnet.

In einer anderen bevorzugten Ausführungsform kann die Dampftrommel 33 von der zentralen Kühl- oder Heizmittelversorgung abgetrennt und in vertikaler Richtung aus dem Wärmetauscher 30 entnommen werden.

In einer weiter bevorzugten Ausführungsform können die Wärmeüberträgermodule 3, von der zentralen Kühl- oder Heizmittelversorgung bzw. den zentralen Kühl- oder Heizmittelversorgungen abgetrennt und in vertikaler Richtung aus dem Wärmetauscher 30 entnommen werden.

In einer noch weiter bevorzugten Ausführungsform kann die Kühl- oder Heizmittelversorgung im Naturumlauf betrieben werden.

In einer noch weiter bevorzugten Ausführungsform stellt der Wärmetauscher 30 einen Kondensator dar und weist mindestens einen Nachkondensator 36 auf.

In einer andern bevorzugten Ausführungsform ist je Wärmeüberträgermodul 3, ein Nachkondensator 36 innerhalb der Außenhülle 2 des Wärmetauschers 30 angeordnet.

Durch den erfindungsgemäßen Aufbau kann die Kapazität von Wärmetauschern erhöht werden, wobei dennoch eine vorteilhafte Kühl- oder Heizmittelversorgung gewährleistet wird und sichergestellt wird, dass die Module 3 sowie die gegebenenfalls vorhandene Dampftrommel 33 auf einfache Art und Weise aus dem Wärmetauscher entfernt und gewartet werden können. Dies wird dadurch erreicht, dass mehrere Wärmeüberträgermodule innerhalb einer Außenhülle 2 angeordnet werden, wobei die Zu- und/oder Ableitungen der Kühl- bzw. Heizmittelversorgung der Wärmeüberträgermodule innerhalb der Außenhülle verbunden sind. Dadurch entsteht innerhalb des Wärmetauschers ein geschlossenes Kühl- oder Heizmittelsystem, und der Wärmetauscher benötigt nur einen zentralen Zu- oder Ablauf für das Kühl- oder Heizmittel. Die Außenhülle des Wärmetauschers kann daher einfach hergestellt werden, und Wärmespannungen werden vermieden, und die verwendete Außenhülle ist von der Anzahl der eingesetzten Module unabhängig. Die Außenhüllen können daher standardisiert werden. Durch die geschlossene Kühl- oder Heizmittelversorgung ist des Weiteren ein Naturumlauf besonders einfach zu verwirklichen, bei dem das Kühl- oder Heizmittel durch Temperaturgradienten durch das Kühl- oder Heizmittelsystem bewegt und die Verwendung eines Pumpsystems überflüssig ist.

Der Wärmetauscher 30 ist besonders für die Verwendung einer integrierten Dampftrommel 33 im Kühl- oder Heizmittelsystem geeignet. Die Verwendung von Dampftrommeln im Zusammenhang mit Wärmetauschern zur Dampferzeugung ist dem Fachmann bekannt. Eine Dampftrommel kann bei Verwendung in einem Kopfkondensator zum Trennen der verschiedenen Phasen des Kühlmittels (flüssig/gasförmig) und zur Einstellung des gewünschten Drucks im Kühlmittelsystem verwendet werden. In Reaktoren können die Dampftrommeln ebenfalls zur Einstellung des Drucks im Kühl- oder Heizmittelsystem und somit zur Bereitstellung von Prozesswärme oder zur Abführung von Prozesswärme dienen. Abhängig von den Prozesstemperaturen können in den Dampftrommeln z.B. Drücke von Vakuum bis zu 160 Bar bei Temperaturen von bis zu 400°C gefahren werden. Auf diese Weise werden im Kühl- oder Heizmittelsystem höchste Drücke und eine optimale Zu- oder Ableitung der Prozesswärme möglich. Gleichzeitig können optimale Wärmeübergangszahlen auf der Medien- bzw. Produktseite erreicht werden und insbesondere Druckverluste bzw. Ausbeuteverluste vermieden werden.

In den Wärmetauschern 30 werden die Dampftrommeln 33 entweder ganz oder teilweise innerhalb der Außenhülle des Wärmetauschers angeordnet. Durch diesen Aufbau können die Abstände zwischen den Festpunkten des Wärmetauschers und damit die Wärmespannung verringert werden. Bevorzugterweise kann die Dampftrommel vollständig innerhalb der Außenhülle des Wärmetauschers angeordnet sein, wodurch die kürzesten Abstände zwischen den Festpunkten erreicht werden können. Hierdurch wird auch ein besonders kompakter Aufbau der Wärmetauscher erreicht.

In einer besonders vorteilhaften Ausführungsform der Erfindung wird die Dampftrommel 33 so angeordnet, dass sie nach Lösen der Zuleitungen nach oben aus dem Wärmetauscher 30 herausgezogen werden kann. Die Dampftrommel wird in der Regel lösbar mit den Zu- und Ableitungen des Kühl- bzw. Heizmittels 4, 5 verbunden, insbesondere durch Verschrauben. Nach Entnahme der Dampftrommel können auf gleichem Weg die Wärmeüberträgermodule 3, bevorzugt einzeln, zu Reparatur- oder Wartungsarbeiten bzw. zur Reinigung entnommen werden. Durch diesen Aufbau ist es ausreichend, eine Öffnung bzw. einen Apparatedeckel 34 in der Außenhülle 2 des Wärmetauschers zur Verfügung zu stellen, durch die die Dampftrommel bzw. ein Wärmeüberträgermodul hindurch passt. Durch die Entnahme der Dampftrommel kann zudem der Freiraum entstehen, der zur Entnahme der Wärmeüberträgermodule benötigt wird. Dieser Aufbau ist insbesondere deshalb vorteilhaft, da große Apparatedeckel teuer und kompliziert in ihrer Herstellung sind. Daher ist es vorteilhaft die Apparatedeckel und die dadurch zur Verfügung gestellten Öffnungen in der Außenhülle so klein wie möglich zu halten. Dies kann zudem auf vorteilhafte Weise dadurch erreicht werden, dass die Dampftrommel einen Bestandteil des Apparatedeckels bildet und somit selbst einen Teil der Öffnung in der Außenhülle des Wärmetauschers verschließt.

Ein weiterer Vorteil der Wärmetauscher 30 ergibt sich durch die frei wählbare Form der Wärmeüberträgermodule und der Außenhülle des Wärmetauschers. Dies ermöglicht Sonderanpassungen der Wärmetauscher an individuelle betriebliche Anforderungen auf einfache Weise.

Thermobleche sind aus dem Stand der Technik bekannt und können wie auch die erfindungsgemäß verwendeten Thermobleche zu Einheiten, sogenannten Wärmeüberträgermodulen, d.h. Thermoblechmodulen, verbunden werden. Der Ausdruck "Wärmeüberträgermodul", so wie hier verwendet, bezeichnet eine derartige Einheit von mehreren verbundenen Thermoblechen, die von Kühl- oder Heizmittel (bzw. Medium) durchströmt werden kann, eine Zu- und Ableitung für die Kühl- oder Heizmittelversorgung aufweist und daher eine Einheit bildet. Bei mehrzügigen Thermoblechen sind erfindungsgemäß unter einem Wärmeüberträgermodul die Thermobleche, deren entsprechende Züge jeweils zu einem Durchgang verbunden sind, zu verstehen. Die Wärmeüberträgermodule können daher auch mehr als eine, maximal jedoch so viele, wie die Anzahl der vorhandenen Züge, Zu- und Ableitungen für eine Kühl- oder Heizmittelversorgung aufweisen.

Der Wärmetauscher enthält mindestens zwei, weiter bevorzugt mindestens drei, noch weiter bevorzugt mindestens vier, weiter bevorzugt mindestens fünf, noch weiter bevorzugt sechs oder mehr Wärmeüberträgermodule innerhalb der Außenhülle. Die Wärmeüberträgermodule können beliebig ausgestaltet sein, wobei mindestens zwei mehrzügige Thermoblechmodule, verwendet werden.

Ein Thermoblechmodul wird durch die Anordnung der miteinander verbundenen Thermobleche, die einen gemeinsamen Zu- und Ablauf für ein Kühl- oder Heizmittel aufweisen, definiert.

Die Wärmeüberträgermodule 3 sind bevorzugterweise derart innerhalb der Außenwand des Wärmetauschers 30 angeordnet, dass sie aus dem Wärmetauscher entfernt werden können. Die Wärmeüberträgermodule sind mit den Zu- und Ableitungen 4, 5 für die Kühl- oder Heizmittelversorgung (bzw. für die Versorgung mit Reaktionsmedien) und zusätzlich bevorzugt mit geeigneten Befestigungsvorrichtungen des Wärmetauschers verbunden. Bevorzugterweise sind die Wärmeüberträgermodule an einem Gerüst im Wärmetauscher aufgehängt.

Zur Entnahme der einzelnen Wärmeüberträgermodule 3 ist es notwendig, diese von der Zu- und Ableitung 4, 5 der Kühl- oder Heizmittelversorgung und den Befestigungsvorrichtungen abzutrennen. Die Zu- und Ableitungen der Wärmeüberträgermodule können mit der Kühl- oder Heizmittelversorgung bzw. den Befestigungsvorrichtungen des Wärmetauschers 30 auf jegliche Weise verbunden sein. Der Ausdruck "Abtrennen", so wie hier verwendet, umfasst das Lösen von Verschlüssen, wie beispielsweise Schraubverschlüssen. Bevorzugterweise werden die Wärmeüberträgermodule lösbar miteinander durch bekannte Verschlussmechanismen verbunden, so dass die Wärmeüberträgermodule auf einfache Weise entfernt und anschließend wieder angeschlossen bzw. befestigt werden können.

Falls der Wärmetauscher 30 als Kopfkondensator verwendet wird, ist es bevorzugt, die Wärmeüberträgermodule 3 mit Auffangvorrichtungen 10, 31 für die Kondensationsprodukte auszustatten. Die Auffangvorrichtungen können unterhalb der Wärmeüberträgermodule angebracht werden und sind bevorzugt innerhalb der Außenhülle 2 des Wärmetauschers miteinander verbunden und weisen zudem eine gemeinsame Ableitung 11, 32 aus dem Wärmetauscher heraus auf. Bevorzugterweise weisen die Wärmeüberträgermodule, die in einer Ebene angeordnet sind, eine gemeinsame Ableitung aus dem Wärmetauscher heraus auf. Geeignete Auffangvorrichtungen sind dem Fachmann bekannt.

Bevorzugterweise ist die Zuleitung 4 für eine Kühl- oder Heizmittelversorgung, die mit einem Wärmeüberträgermodul 3 verbunden ist, auf der Unterseite des Wärmeüberträgermoduls angebracht. Durch diese Zuleitung kann Kühl- oder Heizmittel zu dem Wärmeüberträgermodul hingeleitet werden. Nach dem Durchleiten durch das Wärmeüberträgermodul wird das Kühl- oder Heizmittel über die Ableitung 5, die ebenfalls mit dem Wärmeüberträgermodul verbunden ist, wieder aus dem Wärmeüberträgermodul herausgeführt.

Die Zu- und/oder Ableitungen 4, 5 für eine Kühl- oder Heizmittelversorgung werden innerhalb der Außenhülle 2 des Wärmetauschers 30 zusammengeführt. Bevorzugterweise werden die Zuleitungen innerhalb der Außenhülle zusammengeführt. In der Regel und am stärksten bevorzugt werden sowohl die Zuleitungen zu den einzelnen Wärmeüberträgermodulen innerhalb der Außenhülle zusammengeführt als auch die Ableitungen von den einzelnen Wärmeüberträgermodulen. Hierdurch wird erfindungsgemäß der größte Vorteil dadurch erreicht, dass innerhalb der Außenhülle des Wärmeüberträgermoduls nur eine Öffnung für eine Zuleitung und eine Öffnung für eine Ableitung vorgesehen werden muss.

Dies bedeutet, dass die Zuleitungen (bzw. Ableitungen) für eine Kühl- oder Heizmittelversorgung an einer Stelle innerhalb der Außenhülle zusammenlaufen bzw. durch einen Behälter oder ein Rohr verbunden sind, so dass ein verbundenes Kühl- oder Heizmittelsystem entsteht. Bevorzugterweise können die Zuleitungen (und Ableitungen) von den Wärmeüberträgermodulen abgetrennt und das Kühl- oder Heizmittelsystem so verschlossen werden, dass die Kühl- oder Heizmittelversorgung auch dann weiter betrieben werden kann, wenn ein oder mehrere Wärmeüberträgermodule aus dem Wärmetauscher entfernt wurden. Geeignete Mittel zum Verbinden der Zu- oder Ableitungen für eine Kühl- oder Heizmittelversorgung mit den Wärmeüberträgermodulen sowie geeignete Verschlüsse der Zu- und Ableitungen sind aus dem Stand der Technik bekannt, bevorzugt ist Verschraubung.

Bei erfindungsgemäß verwendeten Thermoblechmodulen, mit denen mehrere Kühl- oder Heizmittelkreisläufe betrieben werden, das heißt, wenn die Zu- und Ableitungen 4a, 4b, 4c, 5a, 5b, 5c eines Thermoblechmoduls nicht miteinander verbunden werden, so muss nur eine Öffnung für eine Zuleitung und eine Öffnung für eine Ableitung für jeden getrennten Kühl- oder Heizmittelkreislauf vorgesehen werden, unabhängig davon, wie viele erfindungsgemäße Thermoblechmodule in den Wärmetauscher eingesetzt werden.

In der vorliegenden Beschreibung werden die Zuleitungen in der Regel mit dem Bezugszeichen 4 bezeichnet und die Ableitungen mit dem Bezugszeichen 5. Im praktischen Betrieb der erfindungsgemäßen Thermoblechmodule kann aber selbstverständlich auch die Zuleitung über den Anschluss 5 und die Ableitung über den Anschluss 4 erfolgen, insbesondere wenn die Medien in verschiedenen Zügen des Thermoblechmoduls gegenläufig geführt werden.

Falls der Wärmetauscher 30 eine Dampftrommel 33 aufweist, so ist es bevorzugt, dass die Ableitungen 5 für eine Kühl- oder Heizmittelversorgung der Wärmeüberträgermodule 3 in die Dampftrommel münden. Zusätzlich bevorzugt sind die Ableitungen für eine Kühl- oder Heizmittelversorgung so mit der Dampftrommel verbunden, dass sie von dieser abgetrennt und die Dampftrommel aus dem Wärmetauscher entfernt werden kann.

Dampftrommeln 33, die für den Wärmetauscher 30 geeignet sind, sind aus dem Stand der Technik bekannt, wobei z.B. auf den aktuellen VDI Wärmeatlas verwiesen werden kann. Die Dampftrommel ist ganz oder teilweise innerhalb der Außenhülle 2 des Wärmetauschers angeordnet. Die Dampftrommel ist bevorzugterweise mit den Zu- und Ableitungen 4, 5 für eine Kühl- oder Heizmittelversorgung der Wärmeüberträgermodule bzw. dem Kühl- oder Heizmittelsystem verbunden, so dass Kühl- oder Heizmittel aus der Dampftrommel heraus über die Zuleitungen in die Wärmeüberträgermodule hinein fließen kann. Das Kühl- oder Heizmittel fließt anschließend durch die Ableitungen aus den Wärmeüberträgermodulen heraus und bevorzugterweise wiederum in die Dampftrommel hinein. Auf diese Weise ergibt sich ein geschlossenes Kühl- oder Heizmittelsystem. Zusätzlich bevorzugt weist die Dampftrommel eine Zuleitung 42 für Kühl- oder Heizmittel nach außen auf, um den Wärmetauscher mit "frischem" Kühl- oder Heizmittel zu versorgen. Weiter bevorzugt weist die Dampftrommel eine Ableitung 39 für Kühl- oder Heizmittel aus dem Kühl- oder Heizmittelsystem nach außen heraus auf. Durch diese Ableitung kann entweder Dampf oder flüssiges Kühl- oder Heizmittel aus dem Wärmetauscher entfernt werden.

Der Ausdruck "Kühl- oder Heizmittelsystem", so wie hier verwendet, umfasst alle Bestandteile wie Rohre, Wärmeüberträgermodule 3, Dampftrommel 33 usw. des Wärmetauschers 30, durch die das Kühl- oder Heizmittel während des Betriebs des Wärmetauschers hindurchgeleitet wird. Das Kühl- oder Heizmittelsystem kann hierbei zusätzliche Bestandteile wie beispielsweise ein Pumpsystem sowie weitere Zu- bzw. Abflüsse nach außen hin aufweisen. Bevorzugterweise weist das Kühl- oder Heizmittelsystem eine Abflussleitung 32 durch die Außenhülle des Wärmetauschers nach außen hin auf. Durch diese Abflussleitung kann das Kühl- oder Heizmittel beispielsweise nach dem Betrieb des Wärmetauschers oder zum Austausch des Kühl- oder Heizmittels während des Betriebs des Wärmetauschers entnommen werden. Bevorzugterweise wird der Austritt der Abflussleitung an einer Stelle in der Außenhülle des Wärmetauschers angebracht, die sich unterhalb der Wärmeüberträgermodule 3, 100 befindet, so dass eine einfache Entnahme des Kühl- oder Heizmittels aus dem Kühl- oder Heizmittelsystem erfolgen kann. Zusätzlich bevorzugt umfasst das Kühl- oder Heizmittelsystem einen Zulauf, der das Einbringen von Kühl- oder Heizmittel in das Kühl- oder Heizmittelsystem ermöglicht. Der Zulauf kann beispielsweise an der Dampftrommel 33 oder der Außenhülle des Wärmetauschers angebracht sein, bevorzugterweise befindet sich der Zulauf oberhalb der Wärmeüberträgermodule, um ein einfaches Befüllen des Kühl- oder Heizmittelsystems zu ermöglichen.

Zusätzlich bevorzugt kann der Wärmeaustauscher 30, falls er als Kopfkondensator ausgebildet ist, Nachkondensatoren 6 aufweisen, die den Wärmeüberträgermodulen 3 nachgeschaltet sind. Der Ausdruck "nachgeschaltet" bedeutet hierbei, dass das zu kühlende Medium zunächst in den Wärmeüberträgermodulen gekühlt wird und anschließend das verbleibende gasförmige Medium in die zusätzlichen Nachkondensatoren geleitet wird. In diesen Nachkondensatoren erfolgt ein weiterer Kondensationsschritt, wobei das entstehende Kondensat dem übrigen Kondensat zugeführt und das verbleibende gasförmige Medium aus dem Wärmetauscher heraus geführt werden kann oder erneut dem Kondensationsprozess zugeführt wird. Bevorzugt wird der Nachkondensator direkt auf einem Wärmeüberträgermodul angebracht (Huckepackkondensator) und weist eine Austrittsöffnung durch die Außenhülle des Wärmetauschers nach außen hin auf. Bevorzugterweise ist auf jedem Wärmeüberträgermodul ein Nachkondensator angebracht.

Zusätzlich bevorzugt umfasst der Wärmetauscher 30 in der Außenhülle 2 einen Apparatedeckel 34. Bei Verwendung einer Dampftrommel 33 kann diese in den Apparatedeckel integriert sein. Dies bedeutet, dass die Dampftrommel mit dem Apparatedeckel verbunden, beispielsweise verschweißt, ist und dadurch die Fläche des Apparatedeckels verringert wird. Der Apparatedeckel wird unter Verwendung von üblichen Vorrichtungen auf dem Wärmetauscher angebracht. Zum Entfernen der Dampftrommel und/oder der Wärmeüberträgermodule 3 wird der Apparatedeckel mit der Dampftrommel nach oben abgenommen und durch das entstehende Loch in der Außenhülle des Wärmetauschers die Wärmeüberträgermodule entnommen. Durch diesen Aufbau wird der Apparateflansch, der teuer und kompliziert in der Herstellung ist, vereinfacht und die Dampftrommel kann zusammen mit dem Apparatedeckel entfernt werden.

In einer alternativen, ebenfalls bevorzugten Ausführungsform ist der Apparatedeckel 34 nicht mit der Dampftrommel 33 fest verbunden, insbesondere in der Ausführungsform, bei der die Dampftrommel sich vollständig innerhalb der Außenhülle 2 des Wärmetauschers 30 befindet. In diesem Fall kann der Apparatdeckel (muss aber nicht) ein oder mehrere Öffnungen für die Zuleitungen bzw. Ableitungen aus der Dampftrommel enthalten.

Zusätzlich bevorzugt weist der Wärmetauscher 30 in der Außenhülle 2 eine Öffnung 35 auf, die den Zugang zum Inneren des Wärmetauschers ermöglicht. Diese Öffnung kann als Mannloch 35 ausgebildet sein, die den Zugang eines Arbeiters in das Innere des Wärmetauschers ermöglicht.

Die Außenhülle 2 des Wärmetauschers 30 kann eine beliebige Form aufweisen. Bevorzugterweise ist sie zylinderförmig.

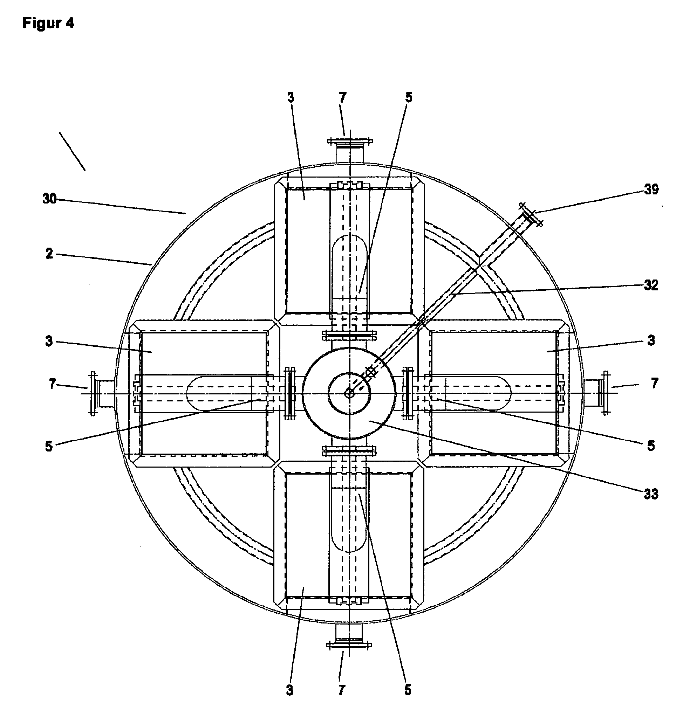

Die Wärmeüberträgermodule 3 können auf beliebige Weise innerhalb der Außenhülle 2 des Wärmetauschers 30 angeordnet sein. Bevorzugterweise werden die Wärmeüberträgermodule, von oben betrachtet, um den Mittelpunkt des Reaktors herum angeordnet, wie es z.B. in Figur 4 gezeigt ist. Bevorzugterweise wird die Dampftrommel 33 in der Mitte des Reaktors angeordnet. Falls keine Dampftrommel vorhanden ist, werden bevorzugterweise die Kühlmittelzu- bzw. Ableitungen 4, 5 in der Mitte des Reaktors zusammengeführt. Bevorzugterweise werden mindestens vier Wärmeüberträgermodule um die Dampftrommel herum in einer Ebene angeordnet. Weiter bevorzugt werden die Wärmeüberträgermodule nicht nur in einer Ebene, sondern auch übereinander angeordnet. Bevorzugterweise sind mindestens zwei Ebenen, weiter bevorzugt mindestens drei Ebenen mit Wärmeüberträgermodulen in dem Wärmetauscher angeordnet.

Geeignete Kühl- oder Heizmittel, die für den erfindungsgemäßen Wärmetauscher 30 verwendet werden können, sind dem Fachmann bekannt und umfassen beispielsweise Wasser bzw. Wasserdampf.

Der Wärmetauscher 30 ist als Reaktor ausgebildet. Ein Reaktor im Sinne der vorliegenden Erfindung ist für die Durchführung von katalysierten Reaktionen mit starker Wärmetönung geeignet. Hierfür geeignete Katalysatoren sind dem Fachmann bekannt und können auf ebenfalls bekannte Weise in den Reaktor, bevorzugterweise in die Wärmeüberträgermodule 3, eingebracht werden. Der erfindungsgemäße Wärmetauscher ist besonders für die Verwendung im großtechnischen Maßstab geeignet und weist daher bevorzugterweise eine Höhe, Breite oder Tiefe von mehr als 2 m, weiter bevorzugt mehr als 4 m, noch weiter bevorzugt mehr als 6 m auf. Die obere Grenze wird nur durch die Baubarkeitsgrenzen, wie Länge der Rollenbahnen, vorhandene Hebevorrichtungen etc. festgelegt.

Zusätzlich bevorzugt können die Wärmeüberträgermodule Zu- und Ableitungen für eine Hilfsmediumversorgung aufweisen. Hilfsmedien können hierbei Inertgase, Reinigungsmittel oder andere flüssige oder gasförmige Stoffe sein, die während oder nach Betrieb des Wärmetauschers beispielsweise in den Wärmeüberträgermodulen oder auf den Außenflächen zur Verfügung stehen sollen. Die Hilfsmediumversorgung ist von der Kühl- oder Heizmittelversorgung getrennt und während das Kühl- oder Heizmittel innerhalb des Kühl- oder Heizmittelsystems verbleibt, gelangt das Hilfsmedium in das Innere des Wärmetauschers, das während des Betriebs vom Medium bzw. den Medien durchströmt wird. Beispielsweise kann über die Hilfsmediumversorgung eine Reinigungsflüssigkeit zu den Wärmeüberträgermodulen geleitet werden, die zur Reinigung der Wärmeüberträgermodule verwendet werden kann, ohne dass diese aus dem Wärmetauscher entnommen werden müssen. Verschmutzte Flüssigkeiten können anschließend durch Ableitungen am Boden des Wärmetauschers abgelassen werden. Die Hilfsmediumversorgung kann aber auch zur Entnahme von Proben der Medien im Wärmetauscher verwendet werden, um die Reaktionsführung besser kontrollieren zu können. Bevorzugt ist auch die Hilfsmediumversorgung so ausgestaltet, dass die Zu- und/oder Ableitungen für das oder die Hilfsmedien innerhalb des Wärmetauschers zusammengeführt werden und über eine einzige Öffnung in der Außenhülle des Wärmetauschers zu- bzw. abgeführt werden können.

Ein Wärmetauscher im Sinne der vorliegenden Erfindung ist für Prozesse mit unterschiedlichen Medien geeignet. Unter einem "Medium" wird ein Fluid verstanden, insbesondere Gase, Flüssigkeiten und dispergierte Feststoffe. Das Medium kann auch aus gasförmigen und flüssigen Anteilen bestehen. Bevorzugt sind die Medien Gase oder Gemische aus Gasen und Flüssigkeiten, am stärksten bevorzugt Gase. Bei der bevorzugten Ausführungsform als Kopfkondensator werden die Medien bevorzugterweise durch Kondensation vom gasförmigen in den flüssigen Zustand übergeführt.

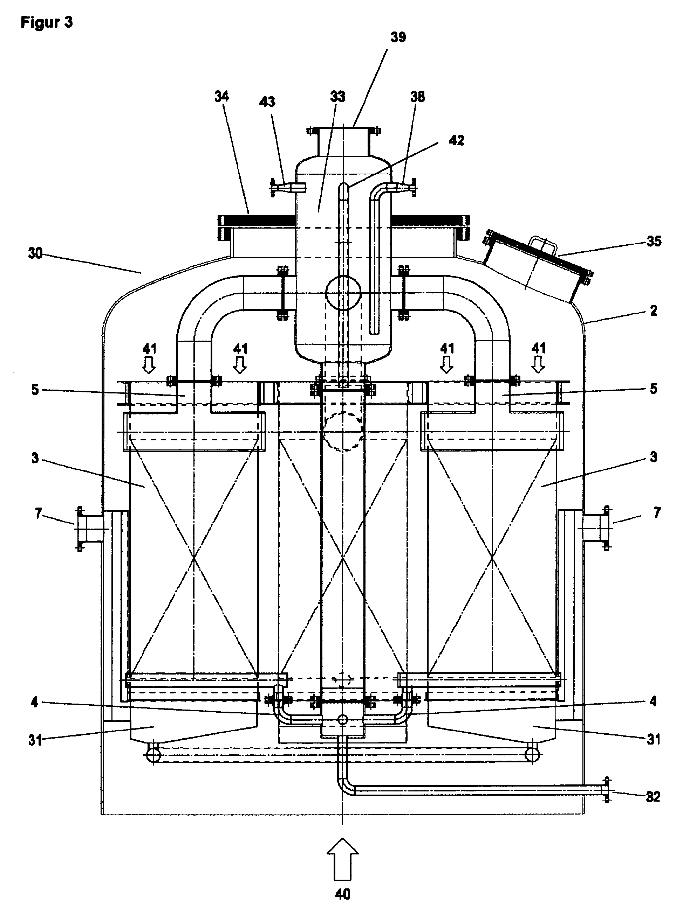

Der erfindungsgemäß verwendete Wärmetauscher wird in den Figuren 3 und 4 anhand eines Kopfkondensators näher beschrieben, die Erfindung betrifft aber ebenfalls Reaktoren zur Durchführung von chemischen Reaktionen, die hier nicht gezeigt sind.
Figur 1 zeigt schematisch einen vorbekannten Kopfkondensator mit einem Wärmeüberträgermodul und Nachkondensator.
Figur 2 zeigt ein Thermoblechmodul.
Figur 3 zeigt einen Wärmetauscher.
Figur 4 zeigt eine Aufsicht auf den Wärmetauscher aus Figur 3.
Figur 5 zeigt schematisch ein dreizügiges Thermoblechmodul, das durch Aufteilung der Thermobleche in drei Züge gebildet wird.
Figur 6 zeigt ein zweizügiges Thermoblechmodul, das in einem Thermoblechzug Schikanen aufweist.
Figur 7 zeigt ein zweizügiges Thermoblechmodul mit nicht geradliniger Längsnaht und Schikanen.
Figur 8 zeigt ein dreizügiges Thermoblechmodul mit einem verkürzten Thermoblechabschnitt.
Figur 9 zeigt ein dreizügiges Thermoblechmodul mit ermöglichter Einmischung von Seitenströmungen durch eine unterbrochene Längsnaht.

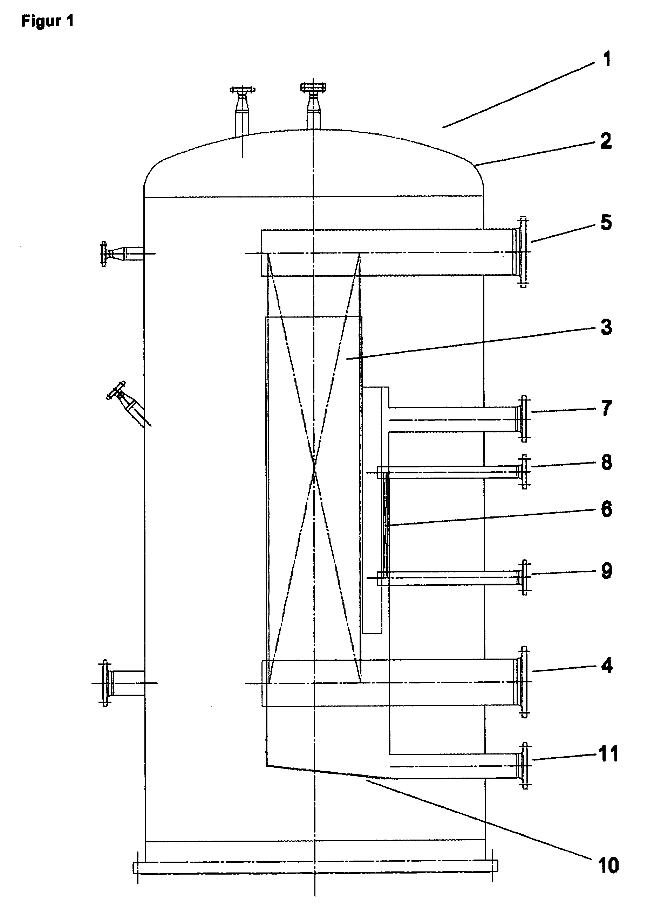

Figur 1 zeigt einen Kopfkondensator 1 der eine Außenhülle 2 aufweist. Innerhalb der Außenhülle 2 ist ein Wärmeüberträgermodul 3 angeordnet, das als Thermoblechmodul ausgebildet ist. Das Thermoblechmodul weist eine Zuleitung 4 und eine Ableitung 5 für Kühlwasser auf. Des Weiteren ist ein Nachkondensator 6 auf dem Thermoblechmodul 3 angebracht, der eine nachgeschaltete Kondensation ermöglicht. Das nicht kondensierte gasförmige Medium kann nach Durchlauf durch den Nachkondensator 6 durch die Ableitung 7 aus dem Kopfkondensator 1 herausgeleitet werden. Der Nachkondensator 6 besitzt ebenfalls eine Zuleitung 8 und eine Ableitung 9 für Kühlwasser. Das entstehende Kondensat kann unter Verwendung eines Auffangbehälters mit Isolierboden 10 aufgefangen und durch die Ableitung 11 aus dem Kopfkondensator 1 herausgeleitet werden.

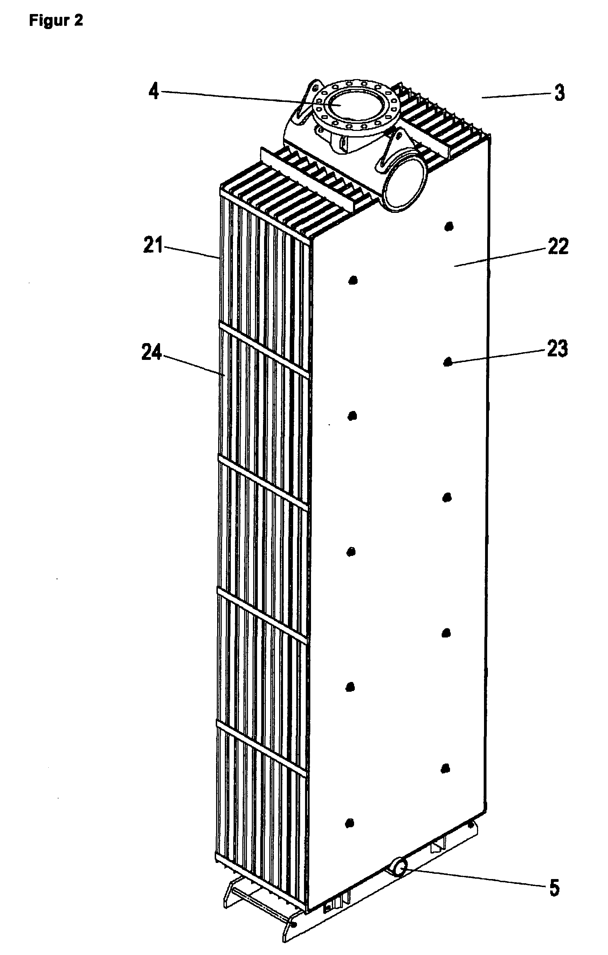

Figur 2 zeigt ein Wärmeüberträgermodul, das ein einzügiges Thermoblechmodul 3 darstellt. Die Thermobleche 21 des Thermoblechmoduls 3 sind miteinander verbunden und weisen eine geschlossene Seite 22 auf. Die Thermoblechmodule 3 können an der geschlossenen Seite 22 Befestigungsvorrichtungen (beispielsweise Durchgangslöcher 23) aufweisen. Zwischen den Thermoblechen 21 des Thermoblechmoduls 3 gibt es Zwischenräume 24, durch die die Medien während des Betriebs des Wärmetauschers hindurchfließen können. Im Falle der Verwendung des Wärmetauschers als Reaktor können diese Zwischenräume 24 mit einem Katalysator, beispielsweise als Katalysatorpartikel, befüllt werden. Der Katalysator kann auch dispergiert oder gelöst in dem Fluid vorliegen. Bei der Verwendung des Wärmetauschers als Kopfkondensator können diese Zwischenräume 24 leer sein oder Vorrichtungen zur Verlangsamung des Durchflusses aufweisen.

Figur 3 zeigt einen Wärmetauscher 30, der Wärmeüberträgermodule 3 innerhalb der Außenhülle 2 aufweist. Die Wärmeüberträgermodule 3 sind als Thermoblechmodule ausgestaltet und weisen eine Zuleitung 4 sowie eine Ableitung 5 für eine Kühl- oder Heizmittelversorgung auf. Des Weiteren sind Auffangbehälter 31 zum Auffangen des Kondensats unterhalb der Wärmeüberträgermodule 3 angebracht. Die Auffangbehälter 31 sind miteinander verbunden und das Kondensat kann über eine Ableitung (nicht dargestellt) aus dem Wärmetauscher 30 herausgeführt werden. Des Weiteren besitzt der Wärmetauscher 30 einen unteren Ablauf 32 durch den Kühl- oder Heizmittel aus dem Wärmetauscher 30 entfernt werden kann. Das Kühl- oder Heizmittelsystem des Wärmetauschers 30 umfasst des Weiteren eine Dampftrommel 33, die mit den Zuleitungen 4 und Ableitungen 5 der Wärmeüberträgermodule 3 verbunden ist. Der Wärmetauscher 30 wird durch einen Apparatedeckel 34 verschlossen, wobei der Apparatedeckel 34 mit der Dampftrommel 33 fest verbunden ist. Wird die Dampftrommel 33 von dem Kühl- oder Heizmittelsystem abgetrennt, so kann sie zusammen mit dem Apparatedeckel 34 nach oben entfernt werden. Durch die entstehende Öffnung im Wärmetauscher 30 können dann die Wärmeüberträgermodule 3 herausgenommen werden. Um den Zugang ins Innere des Wärmetauschers 30 zu ermöglichen, weist die Außenhülle 2 des Wärmetauschers 30 ein Mannloch 35 auf.

Durch die Ableitung 7 können verbleibende, gasförmige Medien aus dem Inneren des Wärmetauschers 30 herausgeleitet werden. In einer bevorzugten Ausführungsform (nicht dargestellt) werden die Ableitungen 7 ebenfalls innerhalb der Außenhülle des Wärmetauschers zusammengeführt, so dass unabhängig von der Zahl der Wärmeüberträgermodule nur eine Öffnung zum Ableiten der verbleibenden, gasförmigen Medien aus dem Wärmetauscher heraus innerhalb der Außenhülle 2 des Wärmetauschers 30 vorgesehen werden muss. Die Dampftrommel 33 des Wärmetauschers 30 weist eine Messvorrichtung 43 auf. Ferner weist die Dampftrommel einen Speisewasserzulauf 42, einen Dampfaustritt 39 und einen Wasserstandsanzeiger 38 auf. Der Wärmetauscher 30 ist als Kopfkondensator ausgestaltet. In Richtung des Pfeils 40 gelangen die Medien in das Innere des Wärmetauschers 30. Die Medien werden dann im Wärmetauscher 30 nach oben steigen und in Richtung der Pfeile 41 in die Wärmeüberträgermodule 3 eintreten und dort kondensiert. Das verbleibende, nicht kondensierte Gas kann über die Ableitung 7 aus dem Wärmetauscher 30 herausgeleitet werden (optional). Das im Wärmetauscher 30 erzeugte Kondensat wird in den Auffangbehältern 31 gesammelt und dann über eine Ableitung aus dem Wärmetauscher herausgeleitet.

Figur 4 zeigt den Wärmetauscher 30 aus Figur 3 von oben. Zu erkennen ist die zentral angeordnete Dampftrommel 33 sowie vier Wärmeüberträgermodule 3 in Form von Thermoblechmodulen mit Ableitungen 5 für das Kühl- oder Heizmittel. Die Außenhülle 2 des Wärmetauschers 30 weist Ableitungen 39 zum Entnehmen des Kondensats auf. Die Ableitungen 39 münden im Inneren des Wärmetauschers 30 in Auffangbehälter 31 (in dieser Ansicht nicht dargestellt). Im übrigen wird auf die Ausführungen zu Figur 4 verwiesen.

Figur 5 zeigt ein Thermoblechmodul 100, aufgebaut aus dreizügigen Thermoblechen 51, 52 und 53. Die drei Thermoblechzüge werden dadurch gebildet, dass übliche einzügige Thermobleche durch Längsnähte 54 in drei Züge aufgeteilt werden. Die entsprechenden Züge werden durch gemeinsame Zu- und Ableitungen 4a, 4b, 4c, 5a, 5b, 5c verbunden. Bei einer erfindungsgemäßen Ausführungsform werden die mit den Thermoblechzügen 51, 52 und 53 verbundenen Zu- und Ableitungen innerhalb der Außenhülle 2 (nicht dargestellt) des Wärmetauschers 30 (nicht dargestellt) wie bei den vorher beschriebenen Ausführungsformen zusammengeführt.

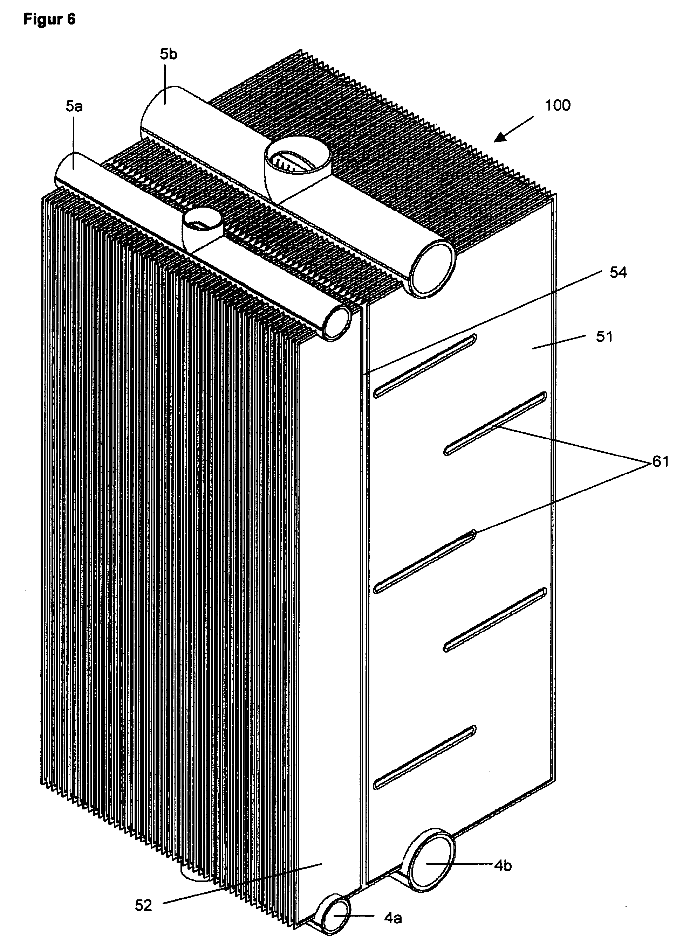

Figur 6 zeigt analog zu Figur 5 ein Thermoblechmodul 100, wobei dieses aus Thermoblechen mit zwei Thermoblechzügen aufgebaut ist und einer der Züge 51 mit Schikanen 61 beispielsweise mittels Roll- oder Schweißnaht ausgestattet ist, wodurch der Medienverlauf innerhalb des Zugs beeinflusst bzw. besser gesteuert werden kann.

Insbesondere wird durch die Schikanen 61 im Zug 51 der Fließweg des Mediums durch den Zug 51 verlängert.

Diese Ausführungsform ist beispielsweise besonders günstig um größere Temperaturunterschiede innerhalb des Thermoblechmoduls 100 zu erzeugen. Wird das gleiche Medium durch die Züge 51 und 52 geleitet (bevorzugte Ausführungsform), so erwärmt sich der Bereich 51 des Thermoblechmoduls 100 stärker als der Bereich 52 des Thermoblechmoduls, da die Temperatur innerhalb des Bereichs 51 nicht so schnell abgeleitet werden kann, wie im Bereich 52. Ein derartiger heterogener Temperaturverlauf innerhalb eines Thermoblechmoduls kann für bestimmte Anwendungen vorteilhaft sein. Die Heterogenität des Temperaturverlaufs kann natürlich noch verstärkt werden, wenn verschiedene Medien durch die Züge 51 und 52 geleitet werden, wobei dann die Zuleitungen und Ableitungen 4a, 4b und 5a, 5b nicht verbunden werden können.

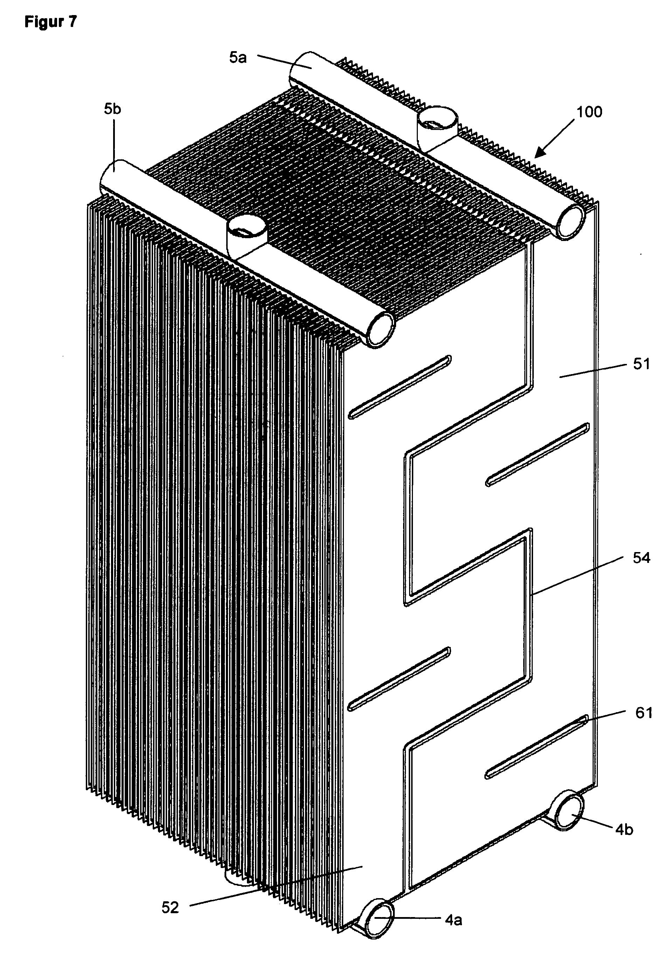

Figur 7 zeigt ein zweizügiges Thermoblechmodul 100, wobei beide Züge 52 analog zu Figur 6 Schikanen 61 aufweisen und die Längsnaht 54 keinen geraden sondern einen kurvenförmigen Verlauf aufweist. Bei dieser Ausführungsform sind die Fließwege des Mediums in beiden Zügen 51 und 52 gleich lang, durch die Schikanen aber insgesamt verlängert.

Diese Ausführungsform ist beispielsweise besonders geeignet um über den gesamten Bereich des Thermoblechmoduls eine möglichst einheitliche Temperaturverteilung zu erzielen. Hierzu kann das Medium im Zug 51 von der Zuleitung 5a zu der Ableitung 4b geleitet werden und im Zug 52 von der Zuleitung 4a zu der Ableitung 5b geleitet werden (Gegenstromprinzip). Während des Durchflusses durch die Züge erwärmt sich das Medium, dass daher am Eintrittsort kühler ist als am Austrittsort (wenn das Medium als Kühlmittel verwendet wird). Die zweizügige Ausgestaltung des Thermoblechmoduls mit entsprechender Kurvenführung ermöglicht damit bei dieser Verfahrensführung eine besonders gleichmäßige Temperaturverteilung, die so innerhalb der bekannten einzügigen Thermoblechmodulen nicht erzielt werden kann.

Figur 8 zeigt ein dreizügiges Thermoblechmodul 100, wobei einer der Züge 52 die in Figur 6 beschriebenen Schikanen 61 aufweist und ein anderer 51 sich nicht über die volle Höhe des Thermoblechs erstreckt, also verkürzt ist. Dementsprechend erstreckt sich der benachbarte Thermoblechabschnitt 52 über den verkürzten Bereich. Die Zuleitung 4a befindet sich demzufolge auch am seitlichen, statt am unteren Rand des Thermoblechmoduls.

Im Gegensatz zu der Ausführungsform in Figur 7, ermöglicht diese Ausführungsform das Einstellen sehr heterogener Temperaturprofile innerhalb der Thermoblechmodule.

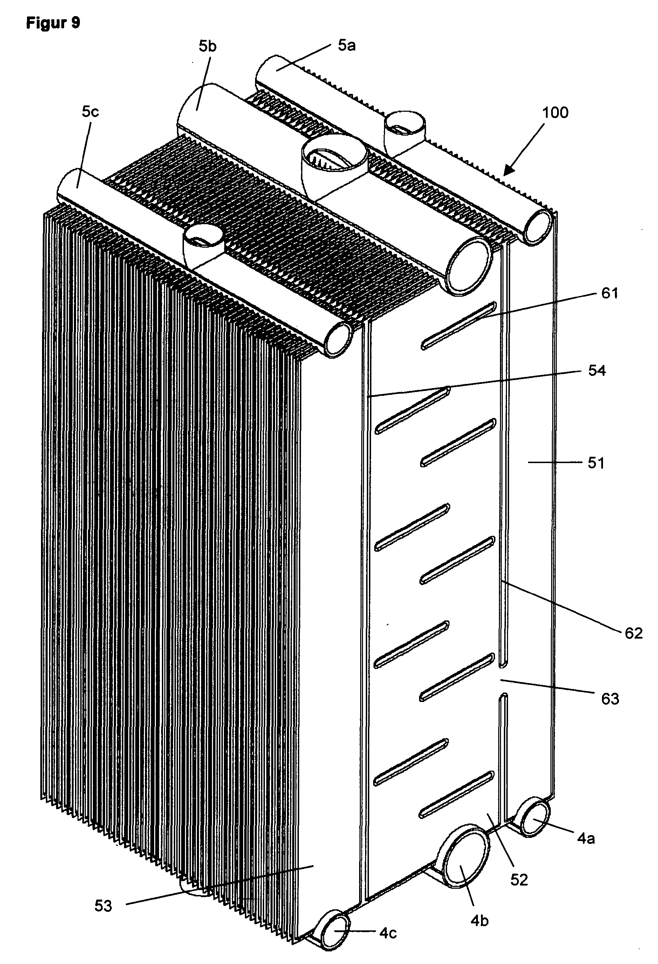

Figur 9 zeigt ein dreizügiges Thermoblechmodul 100, wobei einer der Züge 52 die in Figur 6 beschriebenen Schikanen 61 aufweist und eine der beiden Längsnähte 62 an einer bestimmten Stelle 63 unterbrochen ist, so dass eine Durchtrittsstelle für ein Fluid entsteht, wodurch eine Einmischung von Seitenströmen ermöglicht wird.

Diese Ausführungsform ist insbesondere von Vorteil um innerhalb der Thermobleche chemische Reaktionen durchzuführen. Hier können beispielsweise im Zug 52 die Edukte einer chemischen Reaktion geleitet werden, im Zug 51 der Katalysator zur Durchführung der Reaktion. Außerhalb der Thermobleche kann sich bei dieser Ausführungsform das Kühl- bzw. Heizmittel befinden, das über die Längsrichtung der Thermobleche ein bestimmtes Temperaturprofil einstellt. Die Öffnung 63 ermöglicht es, dass der Katalysator bei einer ganz bestimmten Temperatur mit den Edukten der Reaktion zusammengeführt wird und die Reaktion daher bei einer genau definierten Temperatur gestartet wird, was für bestimmte Reaktionen vorteilhaft sein kann. Durch den Zug 53 kann dann wieder ein Kühl- oder Heizmittel geführt werden, was die Aufrechterhaltung des gewünschten Temperaturverlaufs innerhalb des Thermoblechmoduls unterstützt.

## Patentansprüche

1. Verwendung eines Wärmetauschers mit einer Außenhülle und mindestens zwei Thermoblechmodulen (100) zur Durchführung chemischer Reaktionen, wobei die Thermoblechmodule (100) aus Thermoblechen bestehen, die mittels Roll- oder Schweißnähten (54, 62) in mindestens zwei Züge (51, 52, 53) aufgeteilt sind, wobei die einzelnen Züge der Thermobleche durch gemeinsame Zu- und Ableitungen (4a, 4b, 4c, 5a, 5b, 5c) verbunden sind und wobei die Thermoblechmodule (100) so ausgestaltet sind, dass unterschiedliche Medienkreisläufe in dem Thermoblechmodul zusammengefasst werden können, wobei zumindest eine Roll- oder Schweißnaht (62) zwischen zwei Zügen an mindestens einer Stelle (63) unterbrochen ist, so dass eine Durchtrittsstelle für ein Fluid zwischen den beiden Zügen besteht, so dass die Medien benachbarter Züge in Kontakt treten und eine chemische Reaktion eingehen können.

2. Verwendung gemäß Anspruch 1, **dadurch gekennzeichnet, dass** zumindest einer der Züge Schikanen (61) aufweist.

## Claims

1. Use of a heat exchanger having an outer cover and at least two thermal sheet modules (100) to perform chemical reactions, wherein the thermal sheet modules (100) consist of thermal sheets (54, 62) which are divided in at least two passages (51, 52, 53) by means of rolling or welding seams (54, 62), wherein the individual passages of the thermal sheets are connected by common feed and discharge lines (4a, 4b, 4c, 5b, 5c) and wherein the thermal sheet modules (100) are structured such that different cycles of media can be brought together in the thermal sheet module, whereby at least one rolling or welding seam (62) between two passages is interrupted at at least one point (63) so as to provide a passageway for a fluid between the two passages, so that the media of adjacent passages can be contacted and cause a chemical reaction.

2. Use according to claim 1, **characterized in that** at least one of the passages is provided with flow spoilers (61).

## Revendications

1. Utilisation d'un échangeur de chaleur comprenant une enveloppe extérieure et au moins deux modules à tôles thermiques (100) pour exécuter des réactions chimiques, dans laquelle les modules à tôles thermiques (100) sont constitués de tôles thermiques, qui sont réparties en au moins deux sections (51, 52, 53) au moyen de joints de soudure à la molette ou de joints de soudure (54, 62), dans laquelle les diverses sections des tôles thermiques sont reliées par des conduits d'arrivée et d'évacuation (4a, 4b, 4c, 5a, 5b, 5c) communes et dans laquelle les modules à tôles thermiques (100) sont configurés de telle sorte que différents circuits de moyens peuvent être regroupés dans le module à tôles thermiques, dans laquelle au moins un joint de soudure à la molette ou joint de soudure (62) est interrompu entre deux sections au niveau au moins d'un emplacement (63) de sorte qu'un emplacement de passage pour un fluide existe entre les deux sections de sorte que les milieux de sections adjacentes entrent en contact et peuvent entrer en réaction chimique.

2. Utilisation selon la revendication 1, **caractérisée en ce qu'**au moins une des sections présente des chicanes (61).
